**Europäisches Patentamt**

**European Patent Office**

**Office européen des brevets**

(19)

(11) Veröffentlichungsnummer: **0 000 876**
**B1**

(12)

# EUROPÄISCHE PATENTSCHRIFT

(45) Veröffentlichungstag der Patentschrift:
18.08.82

(51) Int. Cl.³: **B 23 K 11/10**

(21) Anmeldenummer: **78100557.4**

(22) Anmeldetag: **31.07.78**

(54) **Punktschweissvorrichtung für elektrische Widerstandsschweissung, insbesondere zum Präzisionsschweissen von Kleinbauteilen.**

(30) Priorität: **29.08.77 DE 2738854**

(43) Veröffentlichungstag der Anmeldung:
**07.03.79 Patentblatt 79/5**

(45) Bekanntmachung des Hinweises auf die Patenterteilung:
**18.08.82 Patentblatt 82/33**

(84) Benannte Vertragsstaaten:
**BE CH FR GB NL**

(56) Entgegenhaltungen:
**FR-A-1 245 047**
**FR-A-1 329 747**
**US-A-2 179 326**
**US-A-2 286 104**
**US-A-2 432 750**
**US-A-2 810 062**
**US-A-2 839 665**
**US-A-2 912 564**

(73) Patentinhaber: **SIEMENS AKTIENGESELLSCHAFT**
**Berlin und München, Postfach 22 02 61,**
**D-8000 München 22 (DE)**

(72) Erfinder: **Dederer, Günter, Wotanstrasse 12,**
**D-8034 Germering (DE)**
Erfinder: **Mürkl, Helmut, Gabriele-Münter-Strasse 15,**
**D-8000 München 71 (DE)**

## Punktschweissvorrichtung für elektrische Widerstandsschweissung, insbesondere zum Präzisionsschweissen von Kleinbauteilen

Die Erfindung betrifft eine Präzisionspunktschweissvorrichtung für elektrische Widerstandsschweissung, bestehend aus einem Vorrichtungsträger mit einem Zustellteil, ferner einem kugelgeführten Elektrodenschlitten und einer zwischen Zustellteil und Elektrodenschlitten wirkenden, verstellbaren Feder zum Erzeugen der Elektrodenkraft.

Beim Präzisions-Punktschweissen ist es wesentlich, dass die auf dem Werkstück aufliegende Schweisselektrode mit einer genau bemessenen Andruckkraft gegen das Werkstück gedrückt wird. Zugleich muss insbesondere vermieden werden, dass beim Andrücken der Elektrode gegen das Werkstück ein Moment entsteht, welches gegebenenfalls zu einem Versetzen der Elektrodenspitze am Schweissort führt. Selbst eine geringfügige Auslenkung der Elektrodenspitze beim Andruck gegen das Werkstück hat zur Folge, dass beim Auslösen eines Schweissstromimpulses, und zwar durch eine Änderung des wirksamen Querschnittes, während des Stromdurchgangs die Erwärmung am Schweissort der zu verschweissenden Werkstückteile ungleichmässig ist. Ausserdem besteht auch die Gefahr, dass beim Versetzen der Elektrodenspitze eine Verschiebung der Werkstückteile gegeneinander erfolgt.

Bei einer durch die US-A-2 912 564 bekanntgewordenen Punktschweissvorrichtung der eingangs angegebenen Art besteht das Zustellteil aus einem Kolbenzylinderantrieb, dessen Zylinder an dem Vorrichtungsträger befestigt und dessen Kolbenstange auf der die Andruckkraft für die Schweisselektrode erzeugenden Feder abgestützt ist, die sich in einem Gehäuse am Elektrodenschlitten befindet. Bei dieser Vorrichtung ist der Elektrodenschlitten auf der Kolbenstange in einer Kugelbüchse gelagert. Da sich der Elektrodenschlitten in dieser Kugelbüchse verdrehen kann, wird er zusätzlich im Vorrichtungsträger geführt. Durch diese doppelte Führung ist das gesamte Bewegungssystem des Elektrodenschlittens überbestimmt und benötigt für eine reibungsarme Bewegung in den Führungen ausreichend viel Spiel. Das hat zur Folge, dass die Elektrode unter der Belastung der Schweisskraft undefiniert ausweicht. Weiterhin ist bei dieser Vorrichtung die Elektrode nur von unten zentrisch in den Elektrodenschlitten einsetzbar und dort durch eine Schraubklemme gehalten. Ein Auswechseln von Elektroden erfordert infolgedessen immer eine axiale Bewegung der Elektroden und einen entsprechend grossen Hub des Elektrodenschlittens und ist daher zeitaufwendig.

Der Erfindung liegt die Aufgabe zugrunde, eine solche Punktschweissvorrichtung für elektrische Widerstandsschweissung derart auszubilden, dass die sich noch besser zum Präzisionsschweissen eignet und einen leichteren und schnelleren Austausch der Elektrode unter Beibehaltung einer möglichst momentenarmen Halterung gewährleistet.

Diese Aufgabe wird gemäss der Erfindung dadurch gelöst, dass das Zustellteil als Schlitten ausgebildet ist, der im Vorrichtungsträger durch an sich bekannte Kugelführungsschienen verdrehungssicher geführt ist und seinerseits den Elektrodenschlitten trägt und in Kugelführungsschienen führt, und dass die Elektrode im Elektrodenschlitten durch ein Klemmstück so geklemmt wird, dass sie axial und einseitig radial austauschbar ist, und die zum Aufbringen der Elektrodenkraft dienende Feder im Elektrodenschlitten gelagert ist.

Dadurch, dass bei der Vorrichtung nach der Erfindung der Elektrodenschlitten selbst der Elektrodenhalter ist, in den die Elektrode radial eingesetzt werden kann, wird das Auswechseln der Elektrode erleichtert und beschleunigt. Ausserdem wird beim Aufsetzen der Elektrode auf das Werkstück ein Moment auf den Elektrodenschlitten weitgehend vermieden.

Die Führung des Elektrodenschlittens von Schweissvorrichtungen in Kugelführungsschienen im Vorrichtungsträger ist durch die US-A-28 10 062 an sich bekannt.

Vorteilhaft ist die zum Aufbringen der Elektrodenkraft dienende Feder mittels eines an sich bekannten Justierstiftes unter Einfügung eines gegen das Federende lastenden Kugelstützlagers vorspannbar. Durch die Verwendung eines solchen Kugelstützlagers wird ein Verspannen der Feder in der Torsionsrichtung vermieden.

Die axiale Scheitelkante der Schweisselektrode kann ausserhalb der die Elektrode haltenden Klemme am Elektrodenschlitten gelegen sein.

Die Erfindung ermöglicht es auch, mit zwei Vorrichtungen Schweisspunkte nahezu lückenlos nebeneinander am Werkstück anzuordnen, und zwar dadurch, dass die eine der beiden Vorrichtungen gegenüber der anderen, insbesondere der Elektrodenschlitten und seine Elektrodenklemme, spiegelbildlich angeordnet werden.

Ist an dem von aussen zugänglichen Justierstift ein Zeigerkopf befestigt, so arbeitet dieser mit einem am Zustellschlitten befestigten und auswechselbaren Skalenträger zusammen. Der Elektrodenschlitten kann eine von der Elektrodenseite abgewandte offene Bohrung aufweisen. In diese Bohrung ist die Feder eingebracht. Die Feder ist somit leicht auswechselbar bzw. gegen eine Feder mit einer anderen Federcharakteristik austauschbar. Man hat es so mit einfachen Mitteln in der Hand, die Vorrichtung von einem Andruckbereich auf einen anderen Andruckbereich umzurüsten.

An der Vorrichtung kann eine Betätigungsstange in einer durch eine Platte abgedeckten Ausnehmung im Zustellschlitten angeordnet sein, die durch Abnehmen der Abdeckplatte auswechselbar ist. In dieser Ausnehmung kann daher eine für eine pneumatische, hydraulisch oder manuell arbeitende Betätigungsvorrichtung zugehörige Stange eingesetzt werden.

In den übrigen, abhängigen Ansprüchen sind weitere Einzelheiten der Erfindung angegeben.

Im nachfolgenden wird eine gemäss der Erfindung gestaltete Vorrichtung näher erläutert.

Figur 1 zeigt die Präzisionspunktschweissvorrichtung bei abgenommener Schutzverkleidung in der Frontansicht,

Figur 2 die gleiche Vorrichtung gemäss Schnitt II-II und

Figur 3 die spiegelbildliche Anordung der Punktschweissvorrichtung.

In einem Vorrichtungsträger 1 ist ein Zustellschlitten 2 in Richtung des Pfeiles 3 hubbeweglich gelagert. Im Zustellschlitten ist der Elektrodenschlitten 4 ebenfalls in Richtung des Pfeiles 3 rollbeweglich geführt. Der Elektrodenschlitten besitzt ein Klemmstück 5 zur Aufnahme der Schweisselektrode 6. Im vorliegenden Beispiel besteht die Betätigungsvorrichtung 7 aus einem Kolbenzylinder, dessen Kolbenstange 8 über ein Gelenk 9 in einer Ausnehmung 10 des Zustellschlittens 2 gelagert ist. Eine Abdeckplatte 11 ist durch eine hier nicht dargestellte Schraubverbindung mit dem Zustellschlitten verbunden und deckt die Ausnehmung 10 ab. In einer weiteren Ausnehmung 12 des Zustellschlittens ist durch die Abdeckplatte 11 eine Schaftschraube 13 geführt, welche auf ihrem Gewindeschaft 14 eine Mutter 15 zur Einstellung der Hubgrösse der Kolbenstange 8 bzw. des Zustellschlittens trägt. Ein in der Deckplatte 17 des Vorrichtungsträgers 1 eingebrachter Anschlagstift 16 dient als oberer Begrenzungsanschlag für den Elektrodenschlitten 4. Mit dem Zustellschlitten 2 steht eine Andrucklasche 2' in Verbindung, welche einen in der Art einer Schraube ausgebildeten Justierstift 18 trägt. Am Ende 19 des Justierstiftes ist ein Kugelstützlager 20 befestigt, welches gegen eine Andruckfeder 21 lastet, die in eine Aufnahmebohrung 22 des Elektrodenschlittens eingesetzt ist und sich dort gegen einen Teller 23 abstützt. Das Anfahren der Elektrode 6 gegen ein Werkstück 24 erfolgt mittels des Zustellschlittens 2. Bei fortschreitender Bewegung des Zustellschlittens wird die Andruckfeder 21 wirksam. Der Justierstift 18 trägt einen mit einer Messmarke 25 versehenen Kopf 26, der mit einer mit dem Zustellschlitten 2 verbundenen Messskala 27 zusammenarbeitet. Die gewünschte Andruckkraft kann so mittels des Justierstiftes 18 eingestellt werden.

Im Zustellschlitten befindet sich ein berührungsfrei arbeitender Schalter 28, dessen Sensor 29 dann wirksam wird, wenn ein mit dem Elektrodenschlitten in Verbindung stehender Schaltwulst 30 dem Sensor 29 gegenübersteht. Über eine Signalleitung 31 erfolgt sodann ein den Schweissstrom auslösender Schaltimpuls. Die Signalleitung ist über eine Steckverbindung ebenfalls durch die Deckplatte 17 des Vorrichtungsträgers 1 geführt.

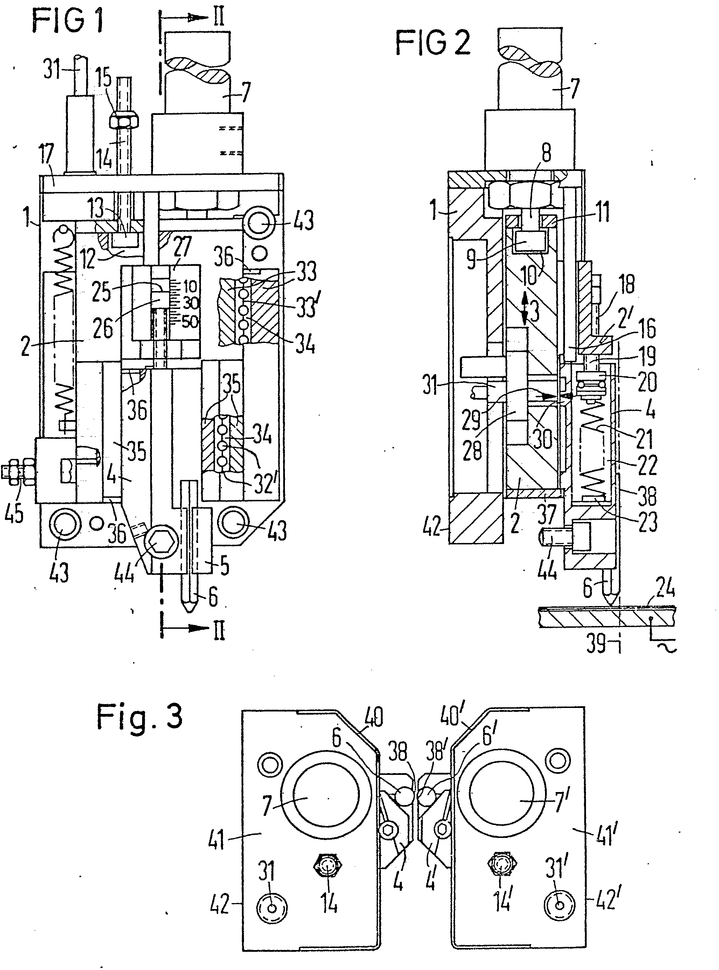

Wie insbesondere aus Figur 1 ersichtlich, sind sowohl der Elektrodenschlitten im Zustellschlitten wie auch der Zustellschlitten im Vorrichtungsträger mittels Kugelführungen 35, 33 gelagert. Wie bei derartigen Führungen bekannt, laufen die Kugeln in prismatischen Nuten 34. Bei einer vorgegebenen Hubgrösse entspricht der von den jeweiligen Kugelkäfigen 32' bzw. 33' zurückgelegte Weg nur der Hälfte dieser Grösse. Durch die Massenträgheit der Kugelkäfige kann es indessen vorkommen, dass sie um einen geringen Betrag nachrutschen. Damit die Kugelkäfige jeweils in ihre Ausgangslage zurückgestellt werden, sind die Kugelführungsschienen 35 des Elektrodenschlittens 4 mit einer Anschlagplatte 36 versehen, welche beim Rückhub — eingeleitet durch den Anschlagstift 16 — die Kugelkäfige zurückstellt. Eine entsprechende Anschlagplatte 37 befindet sich am Zustellschlitten 2.

Die Schweisselektrode 6 ist derart in dem Klemmstück 5 des Elektrodenschlittens 4 gehalten, dass sich ihre äussere Scheitelkante 38 in der Hubebene 39 der Vorrichtung bewegt, wobei aber auch diese Scheitelkante die äussere Konturlinie der Vorrichtung ist.

Figur 3 zeigt zwei gemäss den Figuren 1 und 2 gebildete Punktschweissvorrichtungen, welche jedoch spiegelbildlich zueinander angeordnet sind. Im vorliegenden Beispiel sind die beiden Vorrichtungen jeweils mittels Schutzkappen 40, 40' abgedeckt. Wie ersichtlich, können die beiden Schweissvorrichtungen 41 und 41' so nahe zusammengestellt werden, dass sich die Scheitellinie 38 und 38' der Schweisselektrode 6 und 6' nahezu berühren. Dadurch wird es ermöglicht, zwei Schweisspunkte derart nahe zu setzen, dass sich ihre Schweisslinien berühren oder sogar überlappen.

Sofern man die Schweissvorrichtung auf manuellen Betrieb umrüsten möchte, wird die Deckplatte 17 abgenommen und die Abdeckplatte 11 entfernt. Anstelle der Stange 8 wird jetzt eine gleichgeformte, jedoch mit dem manuellen Antrieb in Verbindung stehende Betätigungsstange in die Ausnehmung 10 eingefügt, worauf man die Abdeckplatte und die Deckplatte aufsetzt.

Der Vorrichtungsträger 1 besitzt eine ebene Anlagefläche 42 mit darin eingebrachten Durchgangsbohrungen 43 zum Befestigen der Vorrichtung an einem Aggregatträger. Die Stromzufuhr zur Schweisselektrode erfolgt durch ein entlastetes Schweisskabel, welches an einem Befestigungsschuh 45 gemäss Figur 1 am Zustellschlitten befestigt und von dort mittels einer Schleife an die Klemmschraube 44 des Elektrodenschlittens 4 geführt ist. Als Material für den Zustell- und Elektrodenschlitten verwendet man ein hochfestes Leichtmetall, z.B. Aluminium. Die Kontaktteile, vorzugsweise der gesamte Elektrodenschlitten, sind auf elektrochemischem Wege mit einer Goldschicht plattiert.

**Patentansprüche**

1. Präzisionspunktschweissvorrichtung für elektrische Widerstandsschweissung, bestehend aus einem Vorrichtungsträger (1) mit einem Zustellteil, ferner einem kugelgeführten Elektrodenschlitten (4) und einer zwischen Zustellteil und Elektrodenschlitten wirkenden, verstellbaren Feder (21) zum Erzeugen der Elektrodenkraft, dadurch gekennzeichnet, dass das Zustellteil als Schlitten (2) ausgebildet ist, der im Vorrichtungsträger (1) durch an sich bekannte Kugelführungsschienen (33) verdrehungssicher geführt ist und seinerseits den Elektrodenschlitten (4) trägt und in Kugelführungsschienen (35) führt, und dass die Elektrode (6) im Elektrodenschlitten durch ein Klemmstück (5) so geklemmt wird, dass sie axial und einseitig radial austauschbar ist, und die zum Aufbringen der Elektrodenkraft dienende Feder (21) im Elektrodenschlitten (4) gelagert ist.

2. Punktschweissvorrichtung nach Anspruch 1, dadurch gekennzeichnet, dass die zum Aufbringen der Elektrodenkraft dienende Feder (21) mittels eines an sich bekannten Justierstiftes (18) unter Einfügung eines gegen das Federende lastenden Kugelstützlagers (20) vorspannbar ist.

3. Punktschweissvorrichtung nach Anspruch 1, dadurch gekennzeichnet, dass die axiale Scheitelkante (38) der Schweisselektrode (6) ausserhalb der die Elektrode haltenden Klemme des Elektrodenschlittens (4) gelegen ist.

4. Punktschweissvorrichtung zum Schweissen nahe beieinanderliegender Schweissorte mit zwei gemäss einem der Ansprüche 1 bis 3 gebildeten Vorrichtungen, dadurch gekennzeichnet, dass die eine der beiden Vorrichtungen (41') gegenüber der anderen eine spiegelbildliche Anordnung, insbesondere des Elektrodenschlittens (4) und seiner Elektrodenklemme, aufweist.

5. Punktschweissvorrichtung nach Anspruch 1, dadurch gekennzeichnet, dass der Elektrodenschlitten (4) eine von der Elektrodenseite abgewandte offene Bohrung (22) zur Aufnahme der Feder (21) aufweist.

6. Punktschweissvorrichtung nach einem der vorherigen Ansprüche mit einem Justierstift mit einem Zeigerkopf, dadurch gekennzeichnet, dass der Zeigerkopf (26) mit einem am Zustellschlitten (2) befestigten und auswechselbaren Skalenträger (27) zusammenarbeitet.

7. Punktschweissvorrichtung nach Anspruch 1, dadurch gekennzeichnet, dass eine Betätigungsstange (8) in einer durch eine Platte (11) abgedeckten Ausnehmung am Zustellschlitten (2) angeordnet und durch Abnehmen der Abdeckplatte auswechselbar ist.

8. Punktschweissvorrichtung nach einem der vorhergehenden Ansprüche, dadurch gekennzeichnet, dass sie einen im Zustellschlitten angeordneten berührungslos arbeitenden Schalter (28) zur Auslösung des Schweissstromimpulses aufweist, der mit einem am Elektrodenschlitten (4) gelegenen Schaltwulst (30) so zusammenarbeitet, dass er im Vorbeifahren auslöst.

9. Punktschweissvorrichtung nach einem der vorhergehenden Ansprüche, dadurch gekennzeichnet, dass sie eine den Hub des Zustellschlittens (2) begrenzende Schaftschraube (14) mit einer darauf geführten Anschlagmutter (15) aufweist.

10. Punktschweissvorrichtung nach Anspruch 1, dadurch gekennzeichnet, dass an den Kugelführungsschienen (35) des Elektrodenschlittens (4) jeweils eine Anschlagplatte (36) befestigt ist, die mittels des Anschlagstiftes (16) oder der Anschlagplatte (37) nur während des Rückhubes die Kugelkäfige (34) in die Ausgangslage führen, so dass sie während der Arbeitsbewegung frei sind.

## Claims

1. A precision spot-welding device for electrical resistance welding comprising a carrier (1) for the device, having a delivery member, a ball-guided electrode slide (4) and an adjustable spring (21) working between the delivery member and the elektrode slide to produce a force exerted by the electrode, characterised in that the derlivery member is constructed as a slide (2) which is guided so as to be resistant to torsion, in the device carrier (1) by ball-guide rails (33) and which slide, on its part, carries the electrode slide (4) and guides it in ballguide rails (35); that the electrode (6) is clamped in the electrode slide by a clamping member (5) in such a way that it can be exchanged axially and radially to one side, and that the spring (21) which serves to apply the electrode force, is housed in the electrode slide (4).

2. A spot-welding device as claimed in Claim 1, characterised in that the spring (21) which serves to apply the electrode force can be preloaded by means of an adjusting pin (18) known per se with the ball thrust bearing (20) which presses against the end of the spring.

3. A spot-welding device as claimed in Claim 1, characterised in that the axial peak edge (38) of the welding electrode (6) is arranged outside the clamp of the electrode slide (4) which holds the electrode.

4. A spot-welding device for welding closely adjacent welding locations, comprising two devices formed in accordance with one of Claims 1 to 3, characterised in that one of the two devices (41') has an enantiomorphic arrangement, in particular of the electrode slide (4) and its electrode clamp, with respect to the other one.

5. A spot-welding device as claimed in Claim 1, characterised in that the electrode slide (4) has a bore (22) therein which is open at the side facing away from the electrode and serves to house the spring (21).

6. A spot-welding device as claimed in one of the preceding Claims, comprising an adjustment pin having an indicating head, characterised in that the indicating head (26) co-operates with an exchangeable scale carrier (27) which is secured to the delivery slide (2).

7. A spot-welding device as claimed in Claim 1, characterised in that an actuating rod (8) is arranged on the delivery slide (2) in a recess which is covered by a plate (11) and is exchangeable by removing the cover plate.

8. A spot-welding device as claimed in one of the preceding Claims, characterised in that the welding device has a proximity switch (28) which is arranged in the delivery slide and severes to trigger the welding current pulse and which co-operates with a switching projection (30), arranged on the electrode slide (4) in such manner that it triggers in passing.

9. A spot-welding device as claimed in one of the preceding Claims, characterised in that it is provided with a headed bolt (14) which limits the travel of the delivery slide (2) and has a stop nut (15) carried thereon.

10. A spot-welding device as claimed in Claim 1, characterised in that a stop plate (36) is secured on the ball-guide rails (35) of the electrode slide (4), which stop plate only guides the ball cages (34) into the initial position during the return travel by means of the stop pin (16) or the stop plate (37), so that said ball cages are free during the working movement.

## Revendications

1. Dispositif de précision pour la soudure par points pour le soudage électrique par résistance, constitué par un support de dispositif (1) avec un élément d'avancement et par un chariot porte-électrode (4) guidé par des billes ainsi que par un ressort (21) agissant entre l'élément d'avancement et le chariot porte-électrode pour fournir la force d'application de l'électrode, caractérisé par le fait que l'élément d'avancement est réalisé sous la forme d'un chariot (2) qui est guidé, sans pouvoir tourner, dans le support de dispositif (1) au moyen de rails de guidage à billes (33), connus en eux-mêmes, et qui, à son tour, porte le chariot porte-électrode (4) et le guide dans des rails de guidage à billes (35) et que l'électrode (6) est bloquée dans le chariot porte-électrode par une pièce de serrage (5) de manière à pouvoir être remplacée axialement et radialement sur un côté, le ressort (21) prévu pour fournir la force d'application de l'électrode étant monté dans le chariot porte-électrode (4).

2. Dispositif pour la soudure par points selon la revendication 1, caractérisé par le fait que le ressort (21) prévu pour fournir la force d'application de l'électrode est susceptible de recevoir une tension préalable à l'aide d'une cheville de réglage (18), connue en elle-même, avec insertion d'un roulement de butée à billes (20) chargeant l'extrémité du ressort.

3. Dispositif pour la soudure par points selon la revendication 1, caractérisé par le fait que l'arête axiale (38) de l'électrode de soudage (6) est située à l'extérieur du collier de serrage du chariot porte-électrode (4), qui maintient l'électrode.

4. Dispositif pour la soudure par points pour souder deux points de soudure disposés près l'un de l'autre à l'aide de deux dispositifs réalisés selon l'une des revendications 1 à 3, caractérisé par le fait que l'un des deux dispositifs (1, 1') présente par rapport à l'autre une disposition réfléchie, en particulier du chariot porte-électrode (4) et de son collier de serrage de l'électrode.

5. Dispositif pour la soudure par points selon la revendication 1, caractérisé par le fait que le chariot porte-électrode (4) comporte pour la réception du ressort (21) un perçage ouvert (22), éloigné du côté de l'électrode.

6. Dispositif pour la soudure par points selon l'une des revendications précédentes, avec cheville de réglage et tête à aiguille, caractérisé par le fait que la tête à aiguille (26) coopère avec un support d'échelle (27) fixé au chariot d'avancement et susceptible d'être remplacé.

7. Dispositif pour la soudure par points selon la revendication 1, caractérisé par le fait qu'une tige de commande (8) est disposée dans une ouverture ménagée dans le chariot d'avancement (2) et est recouverte par une plaque (11), ladite tige pouvant être remplacée par enlèvement de la plaque de couverture.

8. Dispositif pour la soudure par points selon l'une des revendications précédents, caractérisé par le fait qu'il comporte un commutateur (28) disposé dans le chariot d'avancement et opérant sans contact pour déclencher les impulsions du courant de soudage, ledit commutateur coagissant de telle manière avec un bourrelet de commutation (30) prévu sur le chariot porte-électrode (4) qu'il déclenche au passage.

9. Dispositif pour la soudure par points selon l'une des revendications précédentes, caractérisé par le fait qu'il comporte une vis sans tête (14) limitant la course du chariot d'avancement (2) et sur laquelle est guidé un écrou de butée (15).

10. Dispositif pour la soudure par points selon la revendications 1, caractérisé par le fait qu'à chacun des rails de guidage à billes (35) du chariot porte-électrode (4) est fixée une plaque de butée (36) qui, à l'aide de la cheville de butée (16) ou de la plaque de butée (37), ramène les cages (34) des billes dans la position de départ uniquement pendant la course de retour, en sorte que lesdites cages sont libres pendant la course de travail.

1/1

# FIG 1

# FIG 2

# Fig. 3